# EUROPÄISCHE PATENTSCHRIFT

(11) **EP 3 903 373 B1**
(45) Veröffentlichungstag und Bekanntmachung des Hinweises auf die Patenterteilung: **24.07.2024**
(21) Anmeldenummer: 19813775.4
(22) Anmeldetag: 29.11.2019
(51) Int. Cl.: C04B 35/50, C04B 35/622, H01M 4/88, H01M 8/0232, H01M 8/126, H01M 8/1226, H01M 8/12, H01M 4/86

(54) **VERFAHREN ZUR HERSTELLUNG EINER KERAMISCHEN FUNKTIONSSCHICHT**
METHOD OF FORMING A CERAMIC FUNCTIONAL LAYER
PROCÉDÉ DE FABRICATION D'UNE COUCHE FONCTIONNELLE EN CÉRAMIQUE

(30) Priorität: 27.12.2018 DE 102018251732
(43) Veröffentlichungstag der Anmeldung: 03.11.2021
(73) Patentinhaber: Robert Bosch GmbH, 70442 Stuttgart (DE)
(72) Erfinder: GRIESSL, Anja, 71691 Freiberg (DE); MAIER, Nicolas, 71272 Renningen (DE)
(86) Internationale Anmeldenummer: PCT/EP2019/083091
(87) Internationale Veröffentlichungsnummer: WO 2020/135972

(56) Entgegenhaltungen:
- EP-A1- 2 503 631
- US-A1- 2016 233 534
- HUTCHINGS K N ET AL: "Electrochemical oxygen separation and compression using planar, cosintered ceramics", SOLID STATE IONICS, NORTH HOLLAND PUB. COMPANY. AMSTERDAM; NL, NL, vol. 179, no. 11-12, 31 May 2008 (2008-05-31), pages 442 - 450, XP022624804, ISSN: 0167-2738, [retrieved on 20080425], DOI: 10.1016/J.SSI.2008.02.058
- JOO-SIN LEE ET AL: "Effects of gallia additions on sintering behavior of Ce0.8Gd0.2O1.9 ceramics prepared by commercial powders", JOURNAL OF MATERIALS SCIENCE, KLUWER ACADEMIC PUBLISHERS, BO, vol. 40, no. 5, 1 March 2005 (2005-03-01), pages 1153 - 1158, XP019211146, ISSN: 1573-4803, DOI: 10.1007/S10853-005-6931-3
- GUO Y ET AL: "Optimizing the modification method of zinc-enhanced sintering of BaZr"0"."4Ce"0"."4Y"0"."2O"3""'-based electrolytes for application in an anode-supported protonic solid oxide fuel cell", INTERNATIONAL JOURNAL OF HYDROGEN ENERGY, ELSEVIER SCIENCE PUBLISHERS B.V., BARKING, GB, vol. 35, no. 11, 1 June 2010 (2010-06-01), pages 5611 - 5620, XP027060166, ISSN: 0360-3199, [retrieved on 20100521]
- HE WANG ET AL: "Sintering Behavior and Conductivity Study of Yttrium-Doped BaCeO 3 -BaZrO 3 Solid Solutions Using ZnO Additives", JOURNAL OF THE AMERICAN CERAMIC SOCIETY., vol. 92, no. 11, 1 November 2009 (2009-11-01), US, pages 2623 - 2629, XP055661449, ISSN: 0002-7820, DOI: 10.1111/j.1551-2916.2009.03204.x
- GORBOVA E ET AL: "Influence of sintering additives of transition metals on the properties of gadolinium-doped barium cerate", SOLID STATE IONICS, NORTH HOLLAND PUB. COMPANY. AMSTERDAM; NL, NL, vol. 179, no. 21-26, 15 September 2008 (2008-09-15), pages 887 - 890, XP023521188, ISSN: 0167-2738, [retrieved on 20080523], DOI: 10.1016/J.SSI.2008.02.065

## Beschreibung

### Stand der Technik

In der US 2016/0233534 A1 sowie der EP 2 503 631 A1 als auch der XP022624804 (Hutchings K. N. et al.) ist bereits ein Verfahren zur Herstellung einer keramischen Funktionsschicht für eine elektrochemische Zelle vorgeschlagen worden, bei dem in zumindest einem Verfahrensschritt einem keramischen Pulver, welches eine Hauptkomponente der keramischen Funktionsschicht bildet, eine Sinterhilfe aus einem Übergangsmetalloxid zu einer Absenkung einer Sintertemperatur beigemengt wird. Des Weiteren sind aus den Druckschriften EP 2 503 631 A1, XP027060166 (Guo Y. Et al.), XP055661449 (He Wang et al.) und XP023521188 (Gorbova E. et al.) ebenfalls Verfahren zur Herstellung einer keramischen Funktionsschicht für eine elektrochemische Zelle bekannt, bei denen in zumindest einem Verfahrensschritt Zinkoxid als Sinterhilfe dem keramischen Pulver beigemengt wird.

### Offenbarung der Erfindung

Die Erfindung geht aus von einem Verfahren zur Herstellung einer keramischen Funktionsschicht für eine elektrochemische Zelle, insbesondere für eine Brennstoffzelle, wobei in zumindest einem Verfahrensschritt einem keramischen Pulver, welches eine Hauptkomponente der keramischen Funktionsschicht bildet, eine Sinterhilfe aus einem Übergangsmetalloxid zu einer Absenkung einer Sintertemperatur beigemengt wird, wobei in zumindest einem Verfahrensschritt Zinkoxid als Sinterhilfe dem keramischen Pulver beigemengt wird.

Es wird vorgeschlagen, dass in zumindest einem Verfahrensschritt die Sinterhilfe in einem grobkörnigen Zustand, dem keramischen Pulver beigemengt wird, wobei die Sinterhilfe in dem grobförmigen Zustand in Partikeln vorliegt, die zusammen eine massenbezogene spezifische Oberfläche von weniger als 15 m²/g aufweisen. Unter einer "elektrochemischen Zelle" soll insbesondere zumindest ein Teil, insbesondere eine Unterbaugruppe, einer Brennstoffzelle und/oder eines Elektrolyseurs verstanden werden. Insbesondere kann die elektrochemische Zelle auch die gesamte Brennstoffzelle oder den gesamten Elektrolyseur umfassen. Vorzugsweise ist die elektrochemische Zelle zumindest als ein Teil einer Hochttemperaturbrennstoffzelle, insbesondere einer Festoxidbrennstoffzelle, kurz SOFC, und/oder als ein Teil eines Hochtemperaturelektrolyseurs ausgebildet.

Vorzugsweise wird die keramische Funktionsschicht für die elektrochemische Zelle als Komponente einer Brennstoffzelle oder eines Elektrolyseurs ausgebildet. Vorzugsweise wird die keramische Funktionsschicht als Elektrolyt ausgebildet. Es ist aber auch denkbar, dass die keramische Funktionsschicht als Brennstoffelektrode, als Luftelektrode, als Gasbarriere, als Diffusionsbarriere, als Reaktionssperrschicht, als Elektronenblocker, als Oxidationsschutz oder als eine weitere dem Fachmann als sinnvoll erscheinende keramische Funktionsschicht für eine elektrochemische Zelle ausgebildet wird. Vorzugsweise wird die keramische Funktionsschicht gasdicht ausgebildet. Es ist aber auch denkbar, dass die keramische Funktionsschicht porös oder semipermeabel ausgebildet wird. Vorzugsweise soll unter "keramisch" ein Material verstanden werden, dass zumindest zu 25 Vol.-%, bevorzugt zumindest zu 50 Vol.-%, aus einer Keramik besteht. Insbesondere soll unter einer "Hauptkomponente" eines Materials eine Komponente und/oder ein Ausgangsstoff mit dem größten Massenanteil und/oder dem größten Volumenanteil verstanden werden. Vorzugweise ist die Hauptkomponente der keramischen Funktionsschicht eine Keramik. Vorzugsweise wird als Hauptkomponente Cerdioxid verwendet. Insbesondere kann ein keramisches Material auch als ein Keramik umfassender Verbundwerkstoff, wie ein Cermet, ausgebildet sein. Vorzugsweise liegt das keramische Material zur Bildung der keramischen Funktionsschicht in zumindest einem Verfahrensschritt als Pulver vor.

Unter einer "Sinterhilfe" soll insbesondere ein Additiv verstanden werden, das der Hauptkomponente beigefügt wird, um einen Sinterparameter für die keramische Funktionsschicht zu ändern. Insbesondere ist die Sinterhilfe dazu vorgesehen, eine notwendige maximale Sintertemperatur und/oder eine notwendige maximale Sinterdauer für die keramische Funktionsschicht abzusenken, insbesondere im Vergleich zu einer analogen keramischen Funktionsschicht ohne Sinterhilfe. Vorzugsweise liegt die Sinterhilfe in zumindest einem Verfahrensschritt als Pulver vor. Unter "vorgesehen" soll insbesondere speziell eingerichtet, speziell ausgelegt und/oder speziell ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwen-dungs- und/oder Betriebszustand erfüllt und/oder ausführt. Unter einem "grobkörnigen Zustand" eines Materials soll insbesondere ein Zustand verstanden werden, bei welchem das Material in Partikeln vorliegt, die zusammen eine massebezogene spezifische Oberfläche von weniger als 20 m²/g, bevorzugt weniger als 17 m²/g, besonders bevorzugt weniger als 15 m²/g aufweisen. Vorzugsweise ist die Sinterhilfe als Submikropulver ausgebildet und insbesondere nicht als Nanopulver. Insbesondere umfasst die Sinterhilfe eine mittleren Korngrößen von mehr als 50 nm, bevorzugt von mehr als 75 nm, besonders bevorzugt von mehr als 100 nm. Es ist denkbar, dass die die Sinterhilfe eine massenbezogenen spezifische Oberfläche von zumindest 5 m²/g, bevorzugt von zumindest 7 m²/g, besonders bevorzugt von zumindest 10 m²/g aufweist. Die Sinterhilfe kann in dem grobkörnigen Zustand als trockenes Pulver oder mit einer weiteren Komponente vermischt als Paste vorliegen.

Vorzugsweise wird in zumindest einem Verfahrensschritt die Sinterhilfe mit dem keramischen Pulver vermengt. Vorzugsweise werden/wird das keramische Pulver und/oder die Sinterhilfe in zumindest einem Verfahrensschritt durch Zugabe zumindest einer weiteren Komponente zu einer Paste, insbesondere einer Siebdruckpaste oder einer Schablonendruckpaste, verarbeitet. Es ist auch denkbar, dass das keramische Pulver und/oder die Sinterhilfe vor einer Beimengung der Sinterhilfe zu dem keramischen Pulver durch Zugabe zumindest einer weiteren Komponente zu einer Paste verarbeitet werden/wird. Vorzugsweise wird in zumindest einem Verfahrensschritt, insbesondere vor, nach und/oder während der Beimengung der Sinterhilfe, als weitere Komponente zumindest ein, insbesondere organisches, Bindemittel zu dem keramischen Pulver und/oder der Sinterhilfe beigemengt. Vorzugsweise wird in zumindest einem Verfahrensschritt, insbesondere vor, nach und/oder während der Beimengung der Sinterhilfe, als weitere Komponente zumindest ein Lösemittel zu dem keramischen Pulver und/oder der Sinterhilfe beigemengt. Es ist denkbar, dass in zumindest einem Verfahrensschritt, insbesondere vor, nach und/oder während der Beimengung der Sinterhilfe, als weitere Komponente weitere Additive zu dem keramischen Pulver und/oder der Sinterhilfe beigemengt werden. Beispielsweise werden/wird in zumindest einem Verfahrensschritt zumindest ein Dispergator, zumindest ein Weichmacher und/oder zumindest ein Entschäumer als weiteres Additiv dem keramischen Pulver und/oder der Sinterhilfe beigemengt. Vorzugsweise wird in zumindest einem Verfahrensschritt die Paste, welche insbesondere das keramische Pulver, die Sinterhilfe und zumindest eine weitere Komponente umfasst, durchmischt, deagglomeriert und/oder homogenisiert.

Durch die erfindungsgemäße Ausgestaltung des Verfahrens kann ein Einsatz von ultrafeinen Nanopulvern als Sinterhilfe vorteilhaft vermieden werden. Insbesondere kann eine keramische Funktionsschicht mit einer vorteilhaft kostengünstigen Sinterhilfe hergestellt werden. Insbesondere kann eine Staubentwicklung der Sinterhilfe vorteilhaft gering gehalten werden. Insbesondere kann eine Luftbelastung mit der Sinterhilfe, die teilweise nach einem Herstellungsprozess als Schwebstoff zurückbleibt, vorteilhaft gering gehalten werden. Insbesondere kann ein Gesundheitsrisiko aufgrund der Staubentwicklung durch die Sinterhilfe vorteilhaft gering gehalten werden. Insbesondere sind vorteilhaft geringe Schutz- und/oder Reinigungsmaßnahmen gegen eine Ablagerung von aufgewirbelter Sinterhilfe notwendig.

Besonders bevorzugt wird als Übergangsmetalloxid Zinkoxid verwendet. Insbesondere ist die Sinterhilfe in zumindest einem Verfahrensschritt als Zinkoxid-Pulver ausgebildet. Insbesondere wird ein grobkörniges Zinkoxid-Pulver verwendet. Insbesondere wird in zumindest einem Verfahrensschritt das Zinkoxid-Pulver mit dem keramischen Pulver vermengt. Es ist auch vorstellbar, dass als Übergangsmetalloxid ein Kobaltoxid, insbesondere Kobaltmonoxid, Dikobalttrioxid und/oder Trikobalttetroxid, verwendet wird. Durch die erfindungsgemäße Ausgestaltung kann eine Sinterhilfe mit einem vorteilhaft geringen Gesundheitsrisiko verwendet werden. Insbesondere kann eine Sinterhilfe mit einer vorteilhaft hohen Verfügbarkeit und/oder vorteilhaft geringen Kosten verwendet werden.

Ferner wird vorgeschlagen, dass in zumindest einem Verfahrensschritt die Sinterhilfe mit einem Massenanteil von weniger als 0,5 % zu dem keramischen Pulver beigemengt wird. Vorzugsweise wird die Sinterhilfe mit einem Massenanteil von weniger als 0,4 %, besonders bevorzugt von weniger als 0,25 %, zu dem keramischen Pulver beigemengt. Vorzugsweise wird die Sinterhilfe zumindest mit einem Massenanteil von zumindest 0,05 %, bevorzugt von zumindest 0,1 %, besonders bevorzugt von zumindest 0,15 %, zu dem keramischen Pulver beigemengt. Insbesondere bezieht sich der Masseanteil auf eine Gesamtmasse der Sinterhilfe und des keramischen Pulvers oder auf die Gesamtmasse der keramischen Funktionsschicht in einem getrockneten Zustand, insbesondere nach Austreibung des Bindemittels und insbesondere unmittelbar vor einem Sinterprozess. Durch die erfindungsgemäße Ausgestaltung kann mit einer vorteilhaft geringen Menge an Sinterhilfe die Sintertemperatur vorteilhaft gering und/oder eine Sinterdauer vorteilhaft kurz gehalten werden.

Weiterhin wird vorgeschlagen, dass in zumindest einem Verfahrensschritt sich das keramische Pulver bei einer Beimengung der Sinterhilfe in einem grobkörnigen Zustand befindet. Insbesondere umfasst das keramische Pulver eine massenbezogenen spezifische Oberfläche von weniger als 20 m²/g, bevorzugt von weniger als 17 m²/g, besonders bevorzugt von weniger als 15 m²/g. Vorzugsweise ist das keramische Pulver als Submikropulver ausgebildet und insbesondere nicht als Nanopulver. Insbesondere umfasst die Sinterhilfe eine mittleren Korngrößen von mehr als 50 nm, bevorzugt von mehr als 75 m, besonders bevorzugt von mehr als 100nm. Es ist denkbar, dass das keramische Pulver eine massenbezogenen spezifische Oberfläche von zumindest 5 m²/g, bevorzugt von zumindest 7 m²/g, besonders bevorzugt von zumindest 10 m²/g aufweist. Das keramische Pulver kann in dem grobkörnigen Zustand als trockenes Pulver oder mit einer weiteren Komponente vermischt als Paste vorliegen. Durch die erfindungsgemäße Ausgestaltung kann ein Einsatz von ultrafeinen Nanopulvern als keramisches Pulver vorteilhaft vermieden werden. Insbesondere kann eine keramische Funktionsschicht mit einem vorteilhaft kostengünstigen keramischen Pulver hergestellt werden. Insbesondere kann eine Staubentwicklung des keramischen Pulvers vorteilhaft gering gehalten werden. Insbesondere kann eine Luftbelastung mit dem keramischen Pulver vorteilhaft gering gehalten werden. Insbesondere kann ein Gesundheitsrisiko aufgrund der Staubentwicklung durch das keramische Pulver vorteilhaft gering gehalten werden. Insbesondere sind vorteilhaft geringe Schutz- und/oder Reinigungsmaßnahmen gegen eine Ablagerung des aufgewirbelten keramischen Pulvers notwendig.

Des Weiteren wird vorgeschlagen, dass in zumindest einem Verfahrensschritt als keramisches Pulver, insbesondere dotiertes, Cerdioxid verwendet wird. Es ist denkbar, dass undotiertes Cerdioxid als keramisches Pulver verwendet wird. Vorzugsweise ist das Cerdioxid mit einem Dotierstoff mit dreiwertigen Kationen dotiert. Bevorzugt wird Gadolinium-dotiertes Cerdioxid verwendet, kurz CGO. Alternativ oder zusätzlich wird Samarium- und/oder Yttrium-dotiertes Cerdioxid oder ein mit einem anderen einem Fachmann als sinnvoll erscheinenden Dotierstoff dotiertes Cerdioxid verwendet.

Darüber hinaus wird vorgeschlagen, dass in zumindest einem Verfahrensschritt die Sinterhilfe zumindest im Wesentlichen als Reinstoff dem keramischen Pulver beigemengt wird. Insbesondere ist ein Masseanteil an als Reinstoff vorliegender Sinterhilfe größer, insbesondere zumindest zehnmal größer, besonders bevorzugt zumindest 100 mal größer, als ein Anteil der Sinterhilfe, welcher in einer ionischen, kovalenten, metallischen oder sonstigen chemischen Bindung mit weiteren Stoffen vorliegt. Unter einem "im Wesentlichen als Reinstoff" ausgebildeten Material soll insbesondere ein Material mit einer Reinheit von zumindest 85 Vol.-%, bevorzugt von zumindest 95 Vol.-%, besonders bevorzugt von zumindest 99 Vol.-%, verstanden werden. Vorzugsweise werden alle Isotope desselben Stoffs zur Bestimmung einer Reinheit eines Materials gemeinsam als einzelner Stoff gewertet. Es ist auch denkbar, dass die Sinterhilfe in analoger Weise zumindest im Wesentlichen isotopenrein ausgebildet ist. Insbesondere liegt die Sinterhilfe in zumindest einem Verfahrensschritt vor einer Beimengung zu dem keramischen Pulver als zumindest im Wesentlichen reines Zinkoxid vor. Darunter, dass "die Sinterhilfe als Reinstoff beigemengt wird", soll insbesondere verstanden werden, dass die Sinterhilfe bei einer Beimengung zu dem keramischen Pulver zumindest partikelweise als Reinstoff vorliegt. Es ist denkbar, dass die Sinterhilfe bei der Beimengung zu dem keramischen Pulver in ein fluides oder pastöses Trägermedium, insbesondere in einem ungelösten Zustand, eingebettet ist, und insbesondere mit diesem eine Suspension oder Dispersion bildet. Insbesondere sind die Partikel in der Suspension oder Dispersion zumindest im Wesentlichen als Reinstoff ausgebildet. Durch die erfindungsgemäße Ausgestaltung kann das Verfahren mit vorteilhaft wenigen Einzelschritten durchgeführt werden. Insbesondere kann eine Vorbehandlung der keramischen Funktionsschicht zu einer Gewinnung der Sinterhilfe aus einem Vorläuferstoff vermieden werden.

Weiter wird vorgeschlagen, dass in zumindest einem Verfahrensschritt das keramische Pulver zusammen mit der Sinterhilfe auf ein metallgestütztes Substrat der elektrochemischen Zelle aufgebracht wird. Unter einem "metallgestützten Substrat" soll insbesondere ein Untergrund verstanden werden, der zumindest einen Metallträger, insbesondere zu einer mechanischen Stützung von keramischen Funktionsschichten der elektrochemischen Zelle, umfasst. Es ist denkbar, dass das metallgestützte Substrat nur aus dem Metallträger besteht. Alternativ umfasst das metallgestützte Substrat zumindest eine weitere keramische Funktionsschicht der elektrochemischen Zelle, welche insbesondere auf dem Metallträger angeordnet ist. Vorzugsweise umfasst das metallgestützte Substrat zumindest eine Aufbringungsfläche für das keramische Pulver. Vorzugsweise ist die Aufbringungsfläche als Oberfläche der weiteren keramischen Funktionsschicht oder des Metallträgers ausgebildet. Vorzugsweise wird in zumindest einem Verfahrensschritt das keramische Pulver zusammen mit der Sinterhilfe auf die Aufbringungsfläche aufgebracht. Insbesondere wird das keramische Pulver zusammen mit der Sinterhilfe auf die Aufbringungsfläche aufgedruckt, insbesondere mittels eines Siebdruckverfahrens und/oder eines Schablonendruckverfahrens. Alternativ wird das keramische Pulver zusammen mit der Sinterhilfe mittels eines anderen tinten- oder pastenbasierten Verfahrens auf die Aufbringungsfläche aufgebracht, beispielsweise mittels Tintenstrahldruck, mittels Flüssigkeitssprühen, mittels Tauchbeschichtung oder dergleichen. Durch die erfindungsgemäße Ausgestaltung kann vorteilhaft eine mechanisch und/oder thermomechanisch stabile elektrochemische Zelle hergestellt werden.

Weiterhin wird vorgeschlagen, dass in zumindest einem Verfahrensschritt das keramische Pulver zusammen mit der Sinterhilfe und mit einem metallgestützten Substrat der elektrochemischen Zelle unter atmosphärischen Bedingungen gesintert wird. Vorzugsweise wird das keramische Pulver an Luft, insbesondere an Umgebungsluft und insbesondere nicht in Sondergas-Atmosphären wie z.B. Argon, Formiergas o.ä., gesintert. Insbesondere wird bei einem atmosphärischen Luftdruck gesintert. Es ist denkbar, dass der Luftdruck aufgrund der Sintertemperatur und/oder aufgrund von Konvektionsströmen von einem Normaldruck abweicht. Alternativ wird das keramische Pulver zusammen mit der Sinterhilfe unter Sondergas-Atmosphäre gesintert. Durch die erfindungsgemäße Ausgestaltung kann die keramische Funktionsschicht, insbesondere eine auf CGO basierte keramische Funktionsschicht, unter Sinterbedingungen vorteilhaft chemisch stabil gehalten werden.

Ferner wird vorgeschlagen, dass in zumindest einem Verfahrensschritt das keramische Pulver bei einer Temperatur von weniger als 1200°C gesintert wird. Vorzugsweise wird das keramische Pulver bei einer Temperatur von weniger als 1100°C gesintert. Insbesondere wird das keramische Pulver zusammen mit der Sinterhilfe gesintert. Vorzugsweise wird das keramische Pulver in einem auf dem metallgestützten Substrat angeordneten Zustand gesintert. Es ist denkbar, dass das metallische Substrat, insbesondere eine weitere keramische Funktionsschicht des metallischen Substrats, erstmalig zusammen mit dem aufgebrachten keramischen Pulver gesintert wird oder bereits vor einer Aufbringung des keramischen Pulvers in einem vorgelagerten Verfahrensschritt gesintert wird. Es ist auch denkbar, dass das metallische Substrat als bereits gesintertes oder anderweitig hergestelltes Halbzeug vorliegt. Insbesondere wird das keramische Pulver für einen Elektrolyten der elektrochemischen Zelle bei weniger als 1200°C, insbesondere bei weniger als 1100°C, gasdicht gesintert. Durch die erfindungsgemäße Ausgestaltung können weitere Bauteile der elektrochemischen Zelle vorteilhaft geschützt werden. Insbesondere kann eine oxidative Schädigung eines Metallträgers der elektrochemischen Zelle durch die niedrige Sintertemperatur vorteilhaft gering gehalten werden.

Darüber hinaus wird eine elektrochemische Zelle, insbesondere eine Brennstoffzelle, vorgeschlagen, welche zumindest eine keramische Funktionsschicht erhältlich durch ein erfindungsgemäßes Verfahren, umfasst. Vorzugsweise ist die elektrochemische Zelle als Brennstoffzelle, insbesondere als Festoxidbrennstoffzelle, besonders bevorzugt als metallgestützte Festoxidbrennstoffzelle, ausgebildet. Vorzugsweise umfasst die elektrochemische Zelle zumindest ein metallgestütztes Substrat. Insbesondere umfasst das metallgestützte Substrat zumindest einen Metallträger. Vorzugsweise ist der Metallträger aus einem chromreichen ferritischen Edelstahl hergestellt. Vorzugsweise ist der Metallträger porös ausgebildet. Beispielsweise ist der Metallträger als Metallschaum, als Drahtgewebe, als Streckmetall, als Lochblech oder als porös versinterte Pulverschicht ausgebildet. Vorzugsweise umfasst das metallgestützte Substrat zumindest eine Funktionsschichteinheit. Insbesondere ist die Funktionsschichteinheit auf dem Metallträger angeordnet, insbesondere zu einer mechanischen Stabilisierung der Funktionsschichteinheit durch den Metallträger. Insbesondere umfasst die Funktionsschichteinheit zumindest eine weitere keramische Funktionsschicht der elektrochemischen Zelle. Beispielsweise umfasst die Funktionsschichteinheit eine, insbesondere auf dem Metallträger angeordnete, Diffusionsbarriere. Beispielsweise umfasst die Funktionsschichteinheit eine, insbesondere an der Diffusionsbarriere oder an dem Metallträger, angeordnete Brennstoffelektrode und/oder Luftelektrode. Beispielsweise umfasst die Funktionsschichteinheit eine, insbesondere an der Luftelektrode angeordnete, Reaktionssperrschicht. Beispielsweise umfasst die Funktionsschichteinheit eine/n, insbesondere an der Brennstoffelektrode, der Luftelektrode und/oder der Reaktionssperrschicht angeordnete/n, Gasbarriere und/oder Elektronenblocker. Es ist denkbar, dass der Metallträger eine zusätzliche Beschichtung umfasst und/oder dass zwischen dem Metallträger und der Funktionsschichteinheit eine zusätzliche Schutzschicht zu einem Korrosionsschutz des Metallträgers oder zur Verhinderung einer Interdiffusion zwischen dem Metallträger und der keramischen Funktionsschicht und/oder der Funktionsschichteinheit. angeordnet ist. Vorzugsweise ist die keramische Funktionsschicht als Elektrolyt ausgebildet. Insbesondere ist die keramische Funktionsschicht an der Funktionsschichteinheit angeordnet. Es ist denkbar, dass die elektrochemische Zelle zumindest eine weitere Funktionsschichteinheit umfasst, welche insbesondere an der keramischen Funktionsschicht, insbesondere auf einer der Funktionseinheit abgewandten Seite der keramischen Funktionsschicht, angeordnet ist. Insbesondere weist die weitere Funktionseinheit komplementär zur Funktionsschichteinheit zumindest eine Brennstoffelektrode und/oder eine Luftelektrode auf. Insbesondere ist es denkbar, dass zumindest eine der genannten Schichten aus mehreren Teilschichten, welche insbesondere unterschiedliche Materialien umfassen, aufgebaut ist. Durch die erfindungsgemäße Ausgestaltung kann eine vorteilhaft kostengünstige und/oder vorteilhaft einfach herstellbare elektrochemische Zelle, insbesondere Brennstoffzelle, bereitgestellt werden.

Das erfindungsgemäße Verfahren und/oder die elektrochemische Zelle sollen/soll hierbei nicht auf die oben beschriebene Anwendung und Ausführungsform beschränkt sein. Insbesondere können/kann das erfindungsgemäße Verfahren und/oder die elektrochemische Zelle zu einer Erfüllung einer hierin beschriebenen Funktionsweise eine von einer hierin genannten Anzahl von einzelnen Elementen, Bauteilen und Einheiten sowie Verfahrensschritten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Darstellung einer elektrochemischen Zelle,
- Fig. 2: eine schematische Darstellung eines erfindungsgemäßen Verfahrens und
- Fig. 3: ein schematischer Verlauf einer Sinterschwindung eines Funktionsschichtmaterials, hergestellt im Rahmen des erfindungsgemäßen Verfahrens, im Vergleich mit einer Sinterschwindungen von Funktionsschichtmaterialien aus nicht erfindungsgemäßen Verfahren.

### Beschreibung des Ausführungsbeispiels

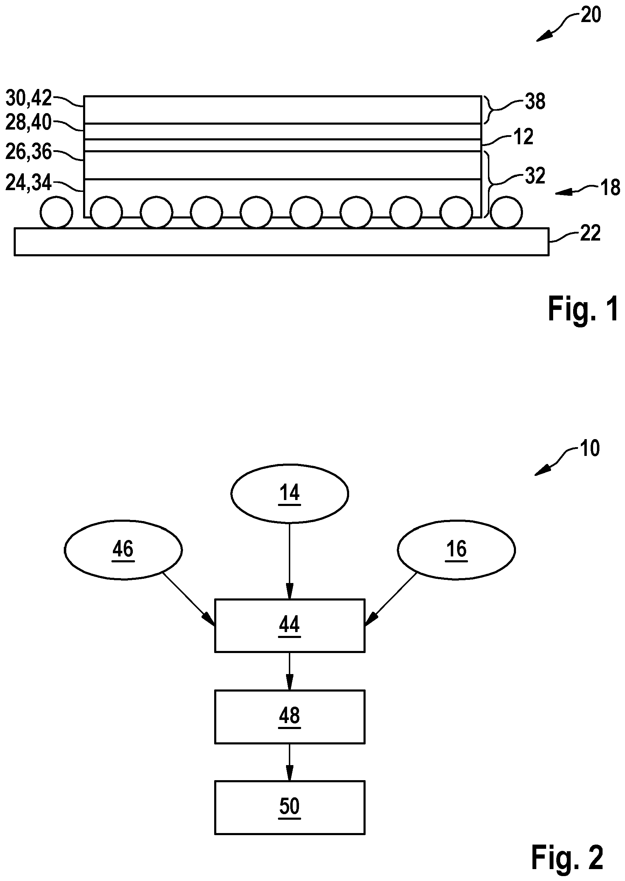

Figur 1 zeigt eine elektrochemische Zelle 20. Vorzugsweise ist die elektrochemische Zelle 20 als Brennstoffzelle, insbesondere als metallgestüzte Festoxidbrennstoffzelle, ausgebildet. Die elektrochemische Zelle 20 umfasst zumindest eine keramische Funktionsschicht 12. Die keramische Funktionsschicht 12 ist erhältlich durch ein Verfahren 10, welches in Figur 2 dargestellt ist. Vorzugsweise umfasst die elektrochemische Zelle 20 ein metallgestütztes Substrat 18. Vorzugsweise ist die keramische Funktionsschicht 12 an dem metallgestützten Substrat 18 angeordnet. Vorzugsweise umfasst das metallgestützte Substrat 18 zumindest einen Metallträger 22. Vorzugsweise ist der Metallträger 22 porös ausgebildet. Insbesondere ist der Metallträger 22 als Metallgewebe oder Metallgitter ausgebildet, von welchem hier der Übersichtlichkeit halber nur zwei Lagen mit zueinander querverlaufenden Strängen dargestellt sind. Beispielsweise ist der Metallträger 22 aus Crofer22 oder einem anderen chromreichen ferritischen Edelstahl gefertigt, beispielsweise aus einer der Legierungen 1.4016, 1.4521, 1.4509 oder einem anderen dem Fachmann als sinnvoll erscheinenden Metall zu einer Stützung der elektrochemischen Zelle 20.

Vorzugsweise umfasst das metallgestützte Substrat 18 zumindest eine Funktionsschichteinheit 32. Insbesondere umfasst die Funktionsschichteinheit 32 zumindest eine weitere keramische Funktionsschicht 24, 26 der elektrochemischen Zelle 20. Insbesondere ist zumindest eine der weiteren keramischen Funktionsschichten 24, 26 der elektrochemischen Zelle 20 als Diffusionsbarriere 34 ausgebildet. Insbesondere ist zumindest eine der weiteren keramischen Funktionsschichten 24, 26 der elektrochemischen Zelle 20 als Brennstoffelektrode 36 ausgebildet. Insbesondere ist die Diffusionsbarriere 34 an dem Metallträger 22 angeordnet. Insbesondere ist die Brennstoffelektrode 36 an der Diffusionsbarriere 34 angeordnet. Insbesondere ist die keramische Funktionsschicht 12 an der Funktionsschichteinheit 32, insbesondere an der Brennstoffelektrode 36, angeordnet.

Vorzugsweise ist die keramische Funktionsschicht 12 als Elektrolyt ausgebildet. Vorzugsweise umfasst die keramische Funktionsschicht 12 als Hauptkomponente Gadolinium-dotiertes Cerdioxid, kurz CGO.

Vorzugsweise umfasst die elektrochemische Zelle 20 zumindest eine weitere Funktionsschichteinheit 38. Insbesondere umfasst die weitere Funktionsschichteinheit 38 zumindest eine zusätzliche keramische Funktionsschicht 28, 30 der elektrochemischen Zelle 20. Insbesondere ist zumindest eine der zusätzlichen keramischen Funktionsschichten 28, 30 der elektrochemischen Zelle 20 als Reaktionssperrschicht 40 ausgebildet. Insbesondere ist zumindest eine der zusätzlichen keramischen Funktionsschichten 28, 30 der elektrochemischen Zelle 20 als Luftelektrode 42 ausgebildet. Vorzugsweise umfasst die keramische Funktionsschicht 12 und/oder die weitere Funktionsschichteinheit 38 eine Elektronen blockende und/oder lonen-leitende Zwischenschicht, beispielsweise aus Yttriumstabilisiertem Zirconiumoxid (YSZ, hier nicht dargestellt). Vorzugsweise ist die Zwischenschicht kleiner als 5 µm. Insbesondere ist die keramische Funktionsschicht 12 an der weiteren Funktionsschichteinheit 38 angeordnet, insbesondere an der Reaktionssperrschicht 40 oder der Zwischenschicht. Vorzugsweise ist die Luftelektrode 42 an der Reaktionssperrschicht 40 angeordnet. Eine Positionierung der weiteren Funktionsschichteinheit 38 und der Brennstoffelektrode 36 innerhalb der Schichtreihenfolge ist prinzipiell austauschbar.

Figur 2 zeigt das Verfahren 10 zur Herstellung der keramischen Funktionsschicht 12 für die elektrochemische Zelle 20. Vorzugsweise umfasst das Verfahren 10 zumindest einen Mischschritt 44. Ein keramisches Pulver 14 bildet eine Hauptkomponente der keramischen Funktionsschicht 12. Vorzugsweise ist das keramische Pulver 14 aus CGO gefertigt. Insbesondere ist das keramische Pulver 14 dazu vorgesehen, in einem Sinterschritt 50 des Verfahrens 10 in die keramische Funktionsschicht 12 überführt zu werden. Zumindest in dem Mischschritt 44 wird dem keramischen Pulver 14 eine Sinterhilfe 16 beigemengt. Die Sinterhilfe 16 ist als Übergangsmetalloxid ausgebildet. Die Sinterhilfe 16 ist zu einer Absenkung einer Sintertemperatur vorgesehen, welche insbesondere notwendig ist um die keramische Funktionsschicht 12 gasdicht zu sintern. In dem Mischschritt 44 wird die Sinterhilfe 16 in einem grobkörnigen Zustand dem keramischen Pulver 14 beigemengt. Insbesondere ist die Sinterhilfe 16 als grobkörniges Pulver ausgebildet. Insbesondere weist die Sinterhilfe 16 eine massenbezogene spezifische Oberfläche von weniger als 15 m²/g auf.

Zumindest in dem Mischschritt 44 wird Zinkoxid als Sinterhilfe 16 dem keramischen Pulver 14 beigemengt. Zumindest in dem Mischschritt 44 wird die Sinterhilfe 16 mit einem Massenanteil von weniger als 0,5 % zu dem keramischen Pulver 14 beigemengt. Zumindest in dem Mischschritt 44 wird die Sinterhilfe 16 zumindest im Wesentlichen als Reinstoff dem keramischen Pulver 14 beigemengt.

Zumindest in dem Mischschritt 44 befindet sich das keramische Pulver 14 bei einer Beimengung der Sinterhilfe 16 in einem grobkörnigen Zustand. Vorzugsweise umfasst das keramische Pulver 14 eine massenbezogene spezifische Oberfläche von weniger als 15 m²/g, insbesondere von weniger als 12 m²/g.

Vorzugsweise werden in dem Mischschritt 44 weitere Komponenten 46 zu dem keramischen Pulver 14 und der Sinterhilfe 16 hinzugefügt. Insbesondere wird das keramische Pulver 14 zusammen mit der Sinterhilfe 16 und insbesondere zusammen mit den weiteren Komponenten 46 in dem Mischschritt 44 zu einer Paste, insbesondere einer Siebdruckpaste oder Schablonendruckpaste, verarbeitet. Es ist auch denkbar, dass das keramische Pulver 14 zusammen mit der Sinterhilfe 16 und insbesondere zusammen mit den weiteren Komponenten 46 in dem Mischschritt 44 zu einer fluiden Suspension, insbesondere einer Tinte, verarbeitet wird. Vorzugsweise umfassen die weiteren Komponenten 46 zumindest ein Bindemittel. Vorzugsweise wird als Bindemittel Polyvinylbutyral verwendet. Alternativ oder zusätzlich wird als Bindemittel Ethyl-Zellulose, Methyl-Zellulose, ein Acrylat, Polyvinylacetat oder andere lösliche Polymere verwendet. Vorzugsweise umfassen die weiteren Komponenten 46 zumindest ein Lösemittel. Vorzugsweise wird als Lösemittel ein Ether verwendet. Alternativ oder zusätzlich wird als Lösemittel, insbesondere abhängig von dem verwendeten Bindemittel, Wasser, ein Alkohol, ein Carbonsäureester, ein Keton oder dergleichen verwendet. Es ist denkbar, dass die weiteren Komponenten 46 zumindest einen Dispergator, zumindest einen Weichmacher und/oder zumindest einen Entschäumer, umfassen. Vorzugsweise werden in dem Mischschritt 44 das keramische Pulver 14 und die Sinterhilfe 16 und insbesondere die weiteren Komponenten 46 miteinander vermengt, deagglomeriert und/oder homogenisiert, insbesondere mittels eines Rührwerks, eines Dreiwalzwerks und/oder eines Dissolvers.

Vorzugsweise umfasst das Verfahren 10 zumindest einen Aufbringungsschritt 48. Zumindest in dem Aufbringungsschritt 48 wird das keramische Pulver 14 zusammen mit der Sinterhilfe 16 auf das metallgestützte Substrat 18 der elektrochemischen Zelle 20 aufgebracht. Insbesondere wird in dem Aufbringungsschritt 48 die in dem Mischschritt 44 hergestellte Paste auf das metallgestützte Substrat 18 aufgebracht. Insbesondere wird das keramische Pulver 14 zusammen mit der Sinterhilfe 16 auf die Brennstoffelektrode 36 aufgebracht. Insbesondere wir das keramische Pulver 14 zusammen mit der Sinterhilfe 16 mittels eines Siebdruckprozesses oder eines Schablonendruckprozesses auf das metallgestützte Substrat 18 aufgebracht. Alternativ wird das keramische Pulver 14 zusammen mit der Sinterhilfe 16 in einem Tintenstrahlprozess, einem Tauchbeschichtungsprozess oder einem Flüssigkeitssprühprozess auf das metallgestützte Substrat 18 aufgebracht.

Vorzugsweise umfasst das Verfahren 10 zumindest den Sinterschritt 50. Zumindest in dem Sinterschritt 50 wird das keramische Pulver 14 zusammen mit der Sinterhilfe 16 und mit dem metallgestützten Substrat 18 der elektrochemischen Zelle 20 unter atmosphärischen Bedingungen gesintert. Zumindest in dem Sinterschritt 50 wird das keramische Pulver 14 bei einer Temperatur von weniger als 1200°C gesintert.

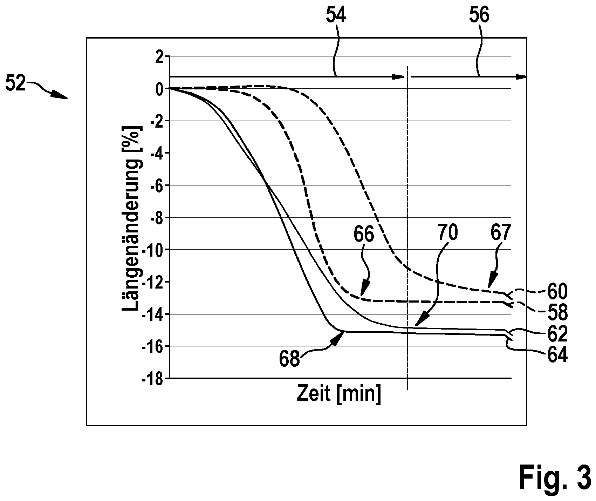

Figur 3 zeigt ein Diagramm 52 mit einem Vergleich des Sinterschritts 50 mit nicht-erfindungsgemäßen Sinterverfahren. Insbesondere ist in dem Diagramm 52 eine Längenänderung, insbesondere eine Sinterschwindung, der keramischen Funktionsschicht 12 aufgrund des Sinterschritts 50 gegen die Zeit aufgetragen. Beispielsweise bezeichnet die Längenänderung der keramischen Funktionsschicht 12 eine Änderung einer Schichtdicke der keramischen Funktionsschicht 12. Vorzugsweise umfasst der Sinterschritt 50 eine Aufheizphase 54. Insbesondere wird in der Aufheizphase 54 eine Temperatur proportional zur Zeit erhöht, beispielsweise mit 1 K/min. Hier dargestellt ist ein Teilabschnitt der Aufheizphase 54, insbesondere ab einem Zeitpunkt, ab dem eine Starttemperatur von ungefähr 600°C für einen Sinterprozess erreicht ist. Insbesondere umfasst der Sinterschritt 50 eine stabile Temperaturphase 56. Insbesondere wird in der stabilen Temperaturphase 56 eine Temperatur zumindest im zeitlichen Mittel konstant gehalten. Es ist insbesondere denkbar, dass die Temperatur in der stabilen Temperaturphase 56 ein sägezahnartiges Profil aufweist. Vorzugsweise sind/ist ein Mittelwert und/oder ein Maximalwert für die Temperatur kleiner als 1200°C, insbesondere kleiner als 1100°C. Insbesondere zeigt das Diagramm 52 zumindest einen Verlauf 58 für die keramische Funktionsschicht 12. Insbesondere zeigt das Diagramm 52 einen weiteren Verlauf 60 für eine keramische Funktionsschicht aus einem grobkörnigen keramischen Pulver ohne Sinterhilfe. Insbesondere zeigt das Diagramm 52 einen zusätzlichen Verlauf 62 für eine keramische Funktionsschicht aus einem feinkörnigen keramischen Pulver ohne Sinterhilfe. Insbesondere zeigt das Diagramm 52 einen alternativen Verlauf 64 für eine keramische Funktionsschicht aus einem feinkörnigen keramischen Pulver mit Sinterhilfe. Ein feinkörniges Pulver ist insbesondere ein Pulver, welches eine größere massenbezogene spezifische Oberfläche als ein Pulver in einem grobkörnigen Zustand aufweist. Insbesondere wurde für den zusätzlichen Verlauf 62 und den alternativen Verlauf ein keramisches Pulver mit einer massenbezogenen spezifischen Oberfläche von ca. 33 m²/g verwendet. Für dem Verlauf 58 und den weiteren Verlauf 60 wurde ein keramisches Pulver mit einer massenbezogenen spezifischen Oberfläche von ca. 12 m²/g verwendet. Für den Verlauf 58 und den alternativen Verlauf 64 wurde die Sinterhilfe mit einem Massenanteil von 0,2 % verwendet. Insbesondere ist ein Endwert 66 für die Längenänderung durch den Sinterprozess für den Verlauf 58 vor einem Endwert 67 für den weiteren Verlauf 60 erreicht. Insbesondere ist ein Endwert 66 für die Längenänderung durch den Sinterprozess für den Verlauf 58 bei einer niedrigeren Temperatur als bei dem weiteren Verlauf 60 erreicht. Insbesondere wird der Endwert 66 für den Verlauf 58 vor dem Endwert 70 für den zusätzlichen Verlauf 62 erreicht. Insbesondere ist ein zeitlicher Abstand des Endwerts 66 für den Verlauf 58 zu dem Endwert 68 des alternativen Verlaufs 64 klein im Vergleich zu einer Gesamtdauer der Aufheizphase 54, insbesondere kleiner als 1/10 einer Gesamtdauer der Aufheizphase 54.

Zusammenfassend verdeutlicht Figur 3 folgende Vorteile des Verfahrens 10:
Ein Funktionsschichtmaterial gemäß dem Verfahren 10 aus grobkörnigem keramischen Pulver 14 und grobkörniger Sinterhilfe 16 kann vorteilhaft bei einer niedrigeren Sintertemperatur gesintert werden als, insbesondere teurere und gesundheitlich bedenklichere, feinkörnige CGO-Pulver, insbesondere Nanopulver, ohne Sinterhilfe. Das Funktionsschichtmaterial gemäß dem Verfahren 10 aus grobkörnigem keramischen Pulver 14 und grobkörniger Sinterhilfe 16 kann vorteilhaft bereits bei Sintertemperaturen gesintert werden, die nur geringfügig höher sind als, insbesondere teurere und gesundheitlich bedenklichere, feinkörnige CGO-Pulver, insbesondere Nanopulver, mit Sinterhilfe.

## Patentansprüche

1. Verfahren zur Herstellung einer keramischen Funktionsschicht (12) für eine elektrochemische Zelle, wobei in zumindest einem Verfahrensschritt einem keramischen Pulver (14), welches eine Hauptkomponente der keramischen Funktionsschicht (12) bildet, eine Sinterhilfe (16) aus einem Übergangsmetalloxid zu einer Absenkung einer Sintertemperatur beigemengt wird, wobei in zumindest einem Verfahrensschritt Zinkoxid als Sinterhilfe (16) dem keramischen Pulver (14) beigemengt wird, **dadurch gekennzeichnet, dass** in zumindest einem Verfahrensschritt die Sinterhilfe (16) in einem grobkörnigen Zustand dem keramischen Pulver (14) beigemengt wird, wobei die Sinterhilfe in dem grobförmigen Zustand in Partikeln vorliegt, die zusammen eine massenbezogene spezifische Oberfläche von weniger als 15 m²/g aufweisen.

2. Verfahren nach Anspruch 1 **dadurch gekennzeichnet, dass** in zumindest einem Verfahrensschritt die Sinterhilfe (16) mit einem Massenanteil von weniger als 0,5 % zu dem keramischen Pulver (14) beigemengt wird.

3. Verfahren nach Anspruch 1 oder 2, **dadurch gekennzeichnet, dass** in zumindest einem Verfahrensschritt sich das keramische Pulver (14) bei einer Beimengung der Sinterhilfe (16) in einem grobkörnigen Zustand befindet.

4. Verfahren nach einem der vorhergehenden Ansprüche, **dadurch gekennzeichnet, dass** in zumindest einem Verfahrensschritt als keramisches Pulver (14) Cerdioxid verwendet wird.

5. Verfahren nach einem der vorhergehenden Ansprüche, **dadurch gekennzeichnet, dass** in zumindest einem Verfahrensschritt die Sinterhilfe (16) zumindest im Wesentlichen als Reinstoff dem keramischen Pulver (14) beigemengt wird.

6. Verfahren nach einem der vorhergehenden Ansprüche, **dadurch gekennzeichnet, dass** in zumindest einem Verfahrensschritt das keramische Pulver (14) zusammen mit der Sinterhilfe (16) auf ein metallgestütztes Substrat (18) der elektrochemischen Zelle aufgebracht wird.

7. Verfahren nach einem der vorhergehenden Ansprüche, **dadurch gekennzeichnet, dass** in zumindest einem Verfahrensschritt das keramische Pulver (14) zusammen mit der Sinterhilfe (16) und mit einem metallgestützten Substrat (18) der elektrochemischen Zelle unter atmosphärischen Bedingungen gesintert wird.

8. Verfahren nach einem der vorhergehenden Ansprüche, **dadurch gekennzeichnet, dass** in zumindest einem Verfahrensschritt das keramische Pulver (14) bei einer Temperatur von weniger als 1100°C gesintert wird.

## Claims

1. Method for producing a ceramic functional layer (12) for an electrochemical cell, wherein, in at least one method step, a ceramic powder (14) which forms a main component of the ceramic functional layer (12) is admixed with a sintering aid (16) comprising a transition metal oxide for lowering a sintering temperature, wherein, in at least one method step, zinc oxide is admixed as sintering aid (16) to the ceramic powder (14), **characterized in that**, in at least one method step, the sintering aid (16) is admixed in a coarse-grained state to the ceramic powder (14), the sintering aid in the coarse-form state being present in particles which together have a specific surface area per unit mass of less than 15 m²/g.

2. Method according to Claim 1, **characterized in that**, in at least one method step, the sintering aid (16) is admixed with a mass fraction of less than 0.5% to the ceramic powder (14).

3. Method according to Claim 1 or 2, **characterized in that**, in at least one method step, the ceramic powder (14) is in a coarse-grained state on admixture of the sintering aid (16).

4. Method according to any of the preceding claims, **characterized in that**, in at least one method step, cerium dioxide is used as ceramic powder (14).

5. Method according to any of the preceding claims, **characterized in that**, in at least one method step, the sintering aid (16) is admixed at least substantially as the pure substance to the ceramic powder (14).

6. Method according to any of the preceding claims, **characterized in that**, in at least one method step, the ceramic powder (14) is applied together with the sintering aid (16) to a metal-supported substrate (18) of the electrochemical cell.

7. Method according to any of the preceding claims, **characterized in that**, in at least one method step, the ceramic powder (14) is sintered together with the sintering aid (16) and with a metal-supported substrate (18) of the electrochemical cell under atmospheric conditions.

8. Method according to any of the preceding claims, **characterized in that**, in at least one method step, the ceramic powder (14) is sintered at a temperature of less than 1100°C.

## Revendications

1. Procédé pour la production d'une couche fonctionnelle céramique (12) pour une cellule électrochimique, dans lequel dans au moins une étape de processus un adjuvant de frittage (16) à base d'un oxyde de métal de transition, destiné à un abaissement d'une température de frittage, est ajouté à une poudre céramique (14) qui constitue un composant principal de la couche fonctionnelle céramique (12), dans lequel dans au moins une étape de processus de l'oxyde de zinc est ajouté en tant qu'adjuvant de frittage (16) à la poudre céramique (14), **caractérisé en ce que** dans au moins une étape de processus l'adjuvant de frittage (16) est ajouté en un état à gros grains à la poudre céramique (14), l'adjuvant de frittage en l'état à gros grains se trouvant en particules qui présentent ensemble une surface spécifique par rapport à la masse de moins de 15 m²/g.

2. Procédé selon la revendication 1 **caractérisé en ce que** dans au moins une étape de processus l'adjuvant de frittage (16) est ajouté en une proportion en masse de moins de 0,5 % à la poudre céramique (14).

3. Procédé selon la revendication 1 ou 2, **caractérisé en ce que** dans au moins une étape de processus la poudre céramique (14) se trouve en un état à gros grains lors d'une addition de l'adjuvant de frittage (16).

4. Procédé selon l'une quelconque des revendications précédentes, **caractérisé en ce que** dans au moins une étape de processus du dioxyde de cérium est utilisé en tant que poudre céramique (14).

5. Procédé selon l'une quelconque des revendications précédentes, **caractérisé en ce que** dans au moins une étape de processus l'adjuvant de frittage (16) est ajouté au moins essentiellement sous forme de matière pure à la poudre céramique (14).

6. Procédé selon l'une quelconque des revendications précédentes, **caractérisé en ce que** dans au moins une étape de processus la poudre céramique (14) est appliquée conjointement avec l'adjuvant de frittage (16) sur un substrat (18) à support métallique de la cellule électrochimique.

7. Procédé selon l'une quelconque des revendications précédentes, **caractérisé en ce que** dans au moins une étape de processus la poudre céramique (14) est frittée dans des conditions atmosphériques, conjointement avec l'adjuvant de frittage (16) et avec un substrat (18) à support métallique de la cellule électrochimique.

8. Procédé selon l'une quelconque des revendications précédentes, **caractérisé en ce que** dans au moins une étape de processus la poudre céramique (14) est frittée à une température de moins de 1 100 °C.
